# EUROPEAN PATENT APPLICATION

(11) **EP 3 028 665 A1**
(43) Date of publication of application: **08.06.2016**
(21) Application number: 14832435.3
(22) Date of filing: 03.06.2014
(51) Int. Cl.: A61C 9/00

(54) **AUTOMATIC IMPRESSION MATERIAL-MIXING DEVICE**

(30) Priority: 30.07.2013 JP 2013157538
(71) Applicant: GC Corporation, Bunkyo-ku Tokyo 113-0033 (JP)
(72) Inventor: KASHIWABARA, Kazuhisa, Tokyo 174-8585 (JP)
(74) Representative: Müller-Boré & Partner Patentanwälte PartG mbB
(86) International application number: PCT/JP2014/064772
(87) International publication number: WO 2015/015896

(57) **Abstract**

An impression material automatic kneading apparatus where packages can be replaced easily is provided.

An impression material automatic kneading apparatus (1) that kneads and discharges at least two kinds of pasty materials which form a dental impression material, the apparatus includes a holder (10) that holds a package (20) which is a container like a bag, the package containing the pasty materials; and a main body (2) that is connected to an opening part (21) of the package, sucks the pasty materials from the package, and kneads said at least two kinds of pasty materials. The holder includes: a holding member (11) that holds the opening part of the package; a moving member (15) that holds an end part that is in a side opposite to the opening part of the package, the moving member movably arranged along the holding member; and an elastic member (19) one end of which is attached to the holding member and another end of which is attached to the moving member. The holder can be attached to and detached from the main body in a state where the package is energized by the elastic member.

## Description

### Technical Field

This invention relates to impression material automatic kneading apparatuses for forming impression materials used in the dental field.

### Background Art

Examples of impression materials used in the dental field include such that a powdered material and water of a proper volume are mixed and kneaded. However, such a case is common these days that proper amounts of two kinds of pasty raw materials (hereinafter may be mentioned as just "pastes") are mixed in an automatic kneading apparatus, to form an impression material, whereby an impression material is easy to be made with a good accuracy, and also the working efficiency can be improved. There are some known combinations as such two kinds of pastes. Examples of the combinations include a combination of a base paste containing alginic acid as the main component and a hardener paste containing gypsum as the main component. Such two kinds of pastes are each put in separate packages that are containers formed from a flexible material.

Automatic kneading apparatuses as described in Patent Literatures 1 and 2 are disclosed, for example. That is, an automatic kneading apparatus is structured so that packages in which two kinds of pastes are attached thereto; just a proper amount of a paste is taken out of each package if necessary; and two kinds of the taken pastes are kneaded and discharged. At this time, it is effective in view of discharging the pastes from the packages without wasting anything and using the pastes in the packages completely that the packages are attached to the automatic kneading apparatus as being energized to stretch. Therefore, means of holding and stretching upper and lower ends of the packages are provided for the automatic kneading apparatus.

### Citation List

### Patent Literature

Patent Literature 1: JPH8-24273A
Patent Literature 2: JP2002-191624A

### Summary of Invention

### Technical Problem

It sometimes takes time to attach the packages to the automatic kneading apparatuses of Patent Literatures 1 and 2. Particularly, operation to energize the packages is troublesome and complicated. Users replace the packages, and thus easy replacement is required. Besides, if the pastes are used up in the middle of treatment, it is necessary to quickly replace the packages in order to avoid the treatment from being delayed.

In view of the above problem, an object of the present invention is to provide an impression material automatic kneading apparatus where packages can be replaced easily.

### Solution to Problem

The present invention will be described hereinafter. Reference signs on the attached drawings are added in parentheses for easy understanding of the present invention, which does not limit the present invention to the illustrated embodiments.

The present invention is an impression material automatic kneading apparatus (1) that kneads and discharges at least two kinds of pasty materials which form a dental impression material, the apparatus includes: a holder (10) that holds a package (20) which is a container like a bag, the package containing the pasty materials; and a main body (2) that is connected to an opening part (21) of the package, sucks the pasty materials from the package, and kneads said at least two kinds of pasty materials, wherein the holder includes: a holding member (11) that holds the opening part of the package; a moving member (15) that holds an end part that is in a side opposite to the opening part of the package, the moving member movably arranged along the holding member; and an elastic member (19) one end of which is attached to the holding member and another end of which is attached to the moving member, and wherein the holder can be attached to and detached from the main body in a state where the package is energized by the elastic member.

### Advantageous Effects of Invention

According to the present invention, a holder that holds a package can be attached to and detached from a main body as the package is energized. Thus, it can be possible to replace the package easily and quickly, as the package is energized in order to discharge a paste without waste.

### Brief Description of Drawings

FIG. 1 is a view to explain a package.
FIG. 2 is a perspective view depicting the structure of an impression material automatic kneading apparatus 1 and packages 20 separately.
FIG. 3 is a perspective view to focus on an insertion port 4.
FIG. 4 (a) is a perspective view of a holder 10 seen from one side, and FIG. 4(b) is a perspective view of the holder 10 seen from a side opposite to that in FIG. 4(a).
FIG. 5 is a perspective view of the impression material automatic kneading apparatus 1.
FIG. 6 is a perspective view to explain a scene of attaching the package 20 to the holder 10.
FIG. 7 is a perspective view of the impression material automatic kneading apparatus 1 where the packages 20 are attached.

### Description of Embodiments

The above described effect and advantage of the present invention are clarified from the embodiments of the invention described in the following. Hereinafter the present invention will be described based on the embodiments illustrated in the drawings. It is noted that this invention is not limited to these embodiments.

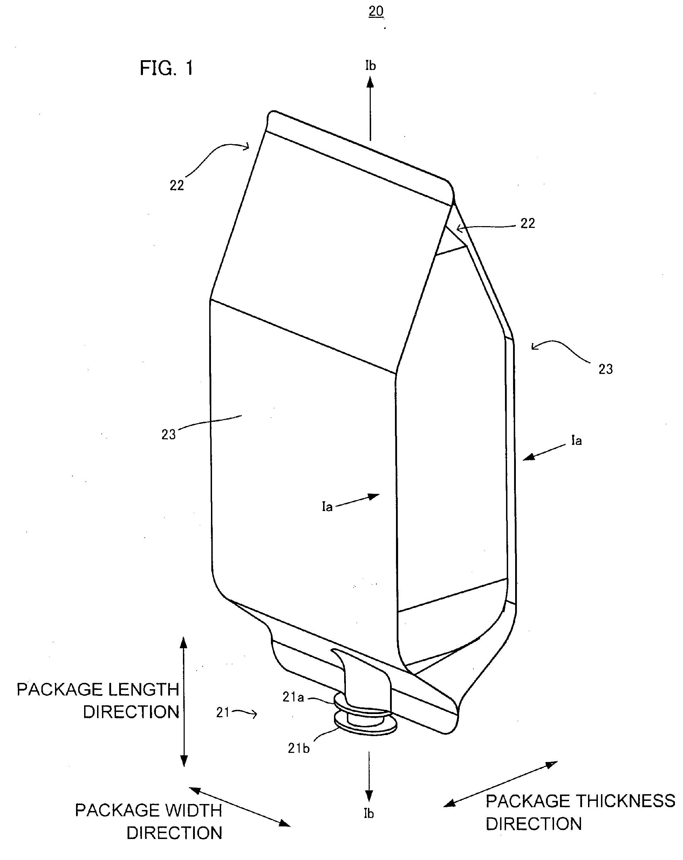

Prior to describing the impression material automatic kneading apparatus 1 according to one embodiment, an example of a package that is attached to the impression material automatic kneading apparatus 1 and that contains a paste. FIG. 1 depicts an exterior perspective view of the package 20 that is in a bulging state with a paste contained therein. As is seen from FIG. 1, the package 20 is a container like a bag that is formed from a flexible member, and the paste is contained therein.

The package 20 has a cylindrical opening part 21 at its one end side. The opening part 21 allows the inside and the outside of the package 20 to communicate, and discharges the paste.

Two annular parts 21a and 21b are arranged around the cylindrical outer circumferential portion of this opening part 21 at a predetermined interval in the direction of cylindrical axis of the opening part 21. Whereby, as described later, the opening part 21 of the package 20 can be fixed to the holder 10 by sliding and inserting an edge part of the impression material automatic kneading apparatus 1 that forms an opening holding part 13 a of the holder 10 into between the annular parts 21a and 21b to be engaged.

On the other hand, a lug part is formed along a side opposite to the opening part 21 of the package 20 when the package 20 is made to have the shape of a bag by sticking parts of the member, which composes the bag, to each other. Two recess parts 22 are provided here (only one recess part can be seen in FIG. 1).

Side face parts of the package 20 are now focused on. The package 20 has two side face parts 23 that have wider faces in its side parts (only one side face part can be seen and the other is arranged on the opposite side in FIG. 1). When the paste contained in the package 20 is reduced by use, the package 20 in a bulging state is deformed so as to be crushed. When the package 20 is crushed as such, deformation in a direction where two side face parts 23 approach each other (direction represented by Ia in FIG. 1) is remarkable. According to this, the package 20 also deforms in a direction where the end part at the opening part 21 side and the end part at the recess parts 22 side move away from each other (direction represented by Ib in FIG. 1) so as to make their distance long.

It is effective to apply tension (energize) to the package 20 in the direction represented by the arrow Ib in order to efficiently discharge the paste from the package 20 without waste. Therefore, a means for carrying out such energization is provided for an automatic kneading means.

As illustrated in FIG. 1, the direction of connecting the end part in the opening part 21 side and the end part in the recess parts 22 side may be described as "package length direction", the direction of connecting two side face parts 23 may be described as "package thickness direction", and the direction orthogonal to the package length direction and the package thickness direction may be described as "package width direction".

Here, the paste contained in one package 20 is kneaded with another paste contained in the other package 20, to form an impression material that is used in dentistry. Materials are not specifically limited as long as an impression material can be formed, and known materials may be used. Examples of the materials include a combination of one paste, which is a base paste containing alginic acid as the main component, and the other paste, which is a hardener paste containing gypsum as the main component.

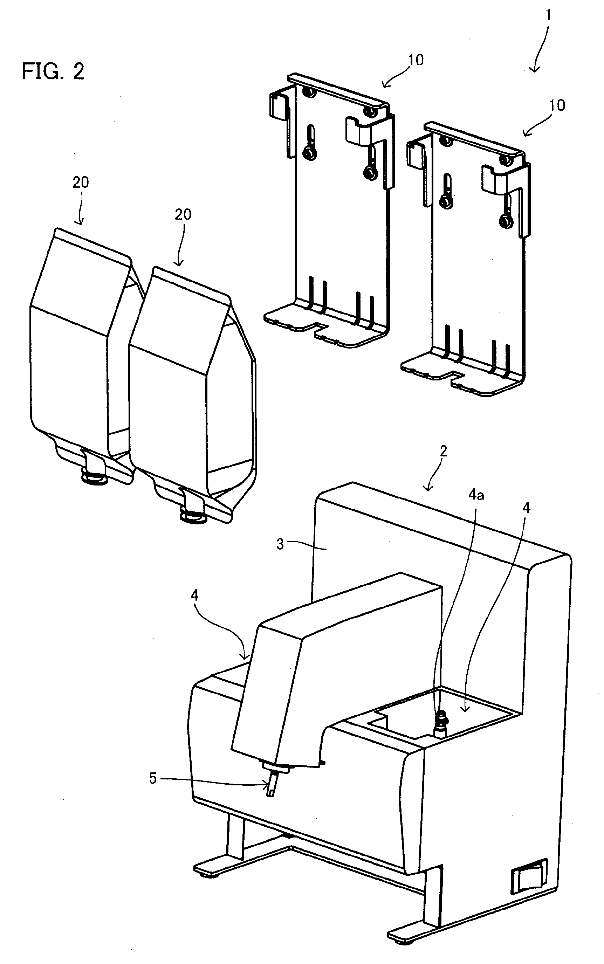

The impression material automatic kneading apparatus 1 according to one embodiment where such a package 20 can be attached will be described. FIG. 2 is a perspective view of the impression material automatic kneading apparatus 1 and the packages 20. In FIG. 2, the structure is separated and arranged to be illustrated. The impression material automatic kneading apparatus 1 is described with reference to FIG. 2 and drawings indicated if necessary.

The impression material automatic kneading apparatus 1 includes a main body 2 and two holders 10.

The main body 2 is a member having a function of taking the pastes contained in the packages 20, which are held by the holders 10 described below, out of each package 20, and kneading and discharging the pastes. The main body 2 has a housing 3 that forms an outer contour of the main body 2. Inside the housing 3, a suction means for sucking and taking the pastes, and a kneading means for kneading two kinds of the pastes, which are sucked, are provided (not depicted). Known forms of sucking means and kneading means may be used.

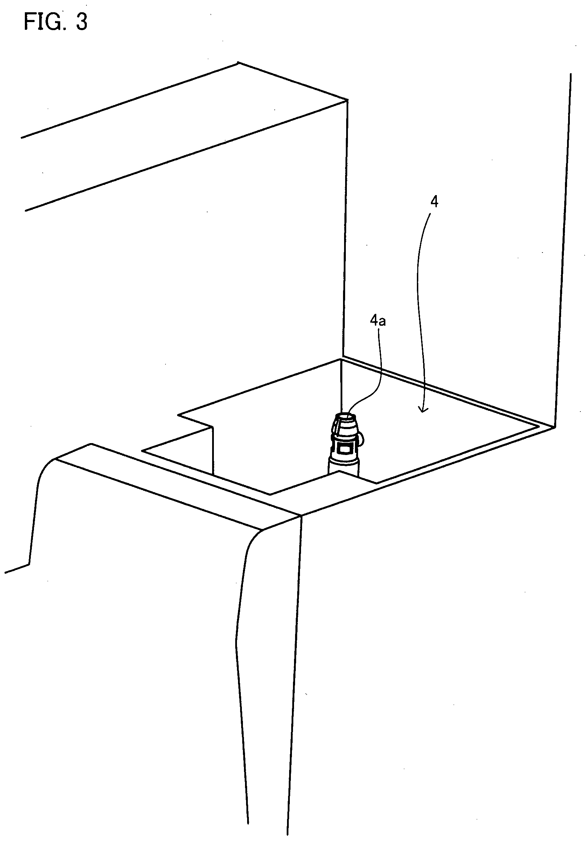

The recessed insertion ports 4 are provided for the main body 2. The insertion ports 4 are for holders 10 to be inserted thereinto, and one end part of each holder 10 can be inserted into each insertion port 4. An inflow port 4a that communicates with the suction means is provided for each insertion port 4. FIG. 3 depicts an enlarged view to focus on a portion of one insertion port 4.

As seen from FIG. 3, the inflow port 4a is structured so that the opening part 21 of the package 20 can be attached thereto and detached therefrom. Thus, when the opening part 21 of the package 20 is attached to the inflow port 4a, the paste in the package 20 flows through the opening part 21 to the inflow port 4a, and is supplied to the main body 2.

Further, as seen from FIG. 2, a discharging means 5 for discharging an impression material that is composed of the kneaded pastes is provided for the main body 2. This discharging means 5 is not specifically limited, and known means may be applied.

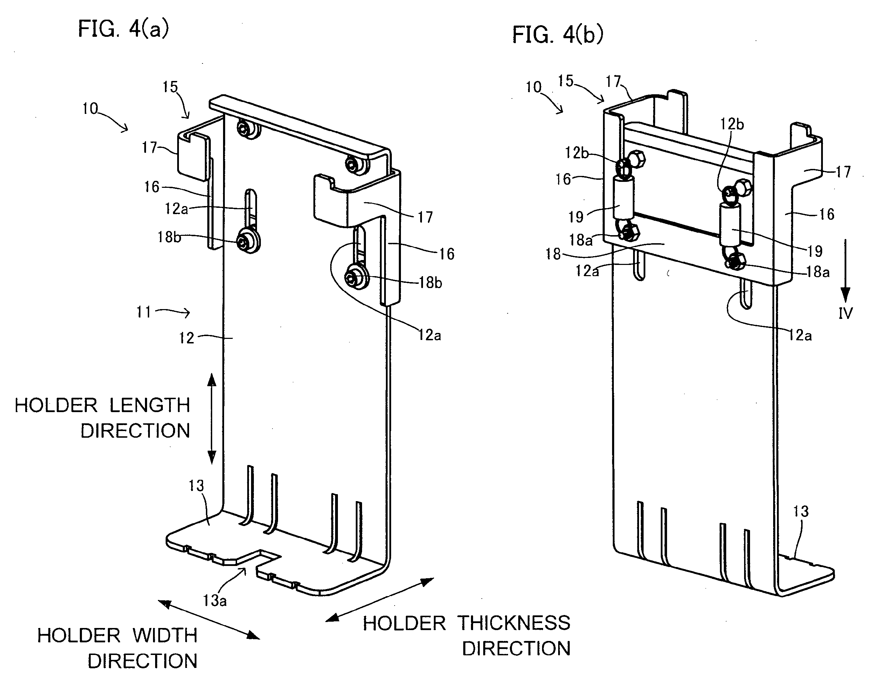

The holders 10 will be described. FIG. 4 depicts a perspective view of one holder 10. FIG. 4(a) is a perspective view seen from the side where the package 20 is attached, and FIG. 4(b) is a perspective view seen from the side opposite to that in FIG. 4(a). As seen from FIGS. 4(a) and 4(b), the holder 10 is structured with a holding member 11, a moving member 15 and elastic members 19.

The holding member 11 has a back plate 12 that is like a rectangular plate. A base plate 13 is provided for the holding member 11. The base plate 13 is like a plate extending from one end of the back plate 12 in the direction of erecting on a face of the back plate 12. Thus, an approximate L-shape is formed by the back plate 12 and the base plate 13. Here, as represented in FIG. 4, the direction where a ridge formed by the back plate 12 and the base plate 13 extends may be described as "holder width direction", the direction of the thickness of the back plate 12 may be described as "holder thickness direction", and the direction orthogonal to the holder width direction and where the back plate 12 extends may be described as "holder length direction".

Two slits 12a that extend in the holder length direction are arranged on the back plate 12 in the holder width direction at a predetermined interval. Elastic member locking projections 12b that are projections are provided at a position on a face of the back plate 12 which is an opposite side to the face where the base plate 13 erects. This position is at an opposite side to the the base plate 13, holding the slits 12a with the base plate 13. Here, the back plate 12 in the holder width direction is formed almost same as or a little larger than the size of the package 20 in the package width direction (see FIG. 1). The back plate 12 in the holder length direction is formed larger than the size of the package 20 in the package length direction.

An opening holding part 13a that is a rectangular slit is formed at the center of a tip part of the base plate 13 (an end part in the holder thickness direction) in the holder width direction.

Here, the thickness of the base plate 13 is almost same as or a little thinner than the interval between the above described annular parts 21 a and 21b provided for the opening part 21 of the package 20. The opening holding part 13a is a slit of an opened tip side of the base plate 13. The size of the opening holding part 13a in the holder width direction is larger than the cylindrical outer diameter of the opening part 21, and smaller than the outer diameters of the annular parts 21a and 21b.

The moving member 15 is a member that can be moved along the holder length direction of the back plate 12. The moving member 15 has guides 16 each of which is arranged along both sides in the holder width direction of the back plate 12. The guides 16 are like plates extending in the holder length direction. Therefore, two guides 16 are arranged as holding the back plate 12 in the holder width direction.

An arm 17 is provided for each guide 16. The arm 17 extends from the guide 16 in the direction same as that where the base plate 13 erects. The arms 17 are bent at their tips in the direction where two arms 17 approach each other.

On the other hand, two guides 16 are, as seen from FIG. 4(b), coupled by a coupling plate 18 on the face side of the back plate 12 where the base plate 13 does not erect. Elastic member locking projections 18a that project in the side opposite to the back plate 12 and guiding projections 18b that project toward the back plate 12 are provided for the coupling plate 18. Both of two elastic member locking projections 18a and two guiding projections 18b are provided at a predetermined interval in the holder width direction. The guiding projections 18b are inserted into the slits 12a of the back plate 12, and are structured so as to be moved along the slits 12a. The tips of the guiding projections 18b are formed to be thick so as not to pass through the slits 12a, which prevents the moving member 15 from leaving the back plate 12. Examples of means for making the tips thick like the above include attaching bolts.

The elastic members 19 are elastic members such as springs. Springs are applied in this embodiment as well. As seen from FIG. 4(b), two elastic members 19 are provided in this embodiment. One end of each elastic member 19 is locked by the elastic member locking projection 12b of the back plate 12, and another end thereof is locked by the elastic member locking projections 18a of the coupling plate 18. This makes it possible to apply energetic force to the moving member 15 when the moving member 15 is moved. The elastic member 19 is arranged so that as described later, the moving member 15 holds an end part of the package 20 that is in the opposite side to the opening part 21 to be energized in the direction of stretching the package in the holder length direction. More specifically, if the moving member 15 is moved so as to approach the base plate 13 as illustrated by the arrow IV in FIG. 4(b), the moving member 15 is energized in contrast in the direction of being away from the base plate 13.

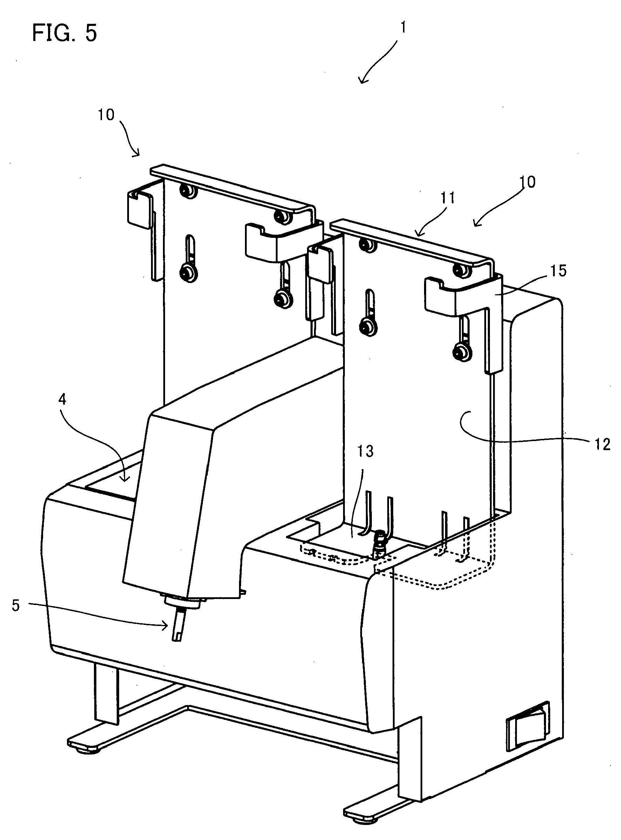

The impression material automatic kneading apparatus 1 structured as above is structured so that the holders 10 can be attached to and detached from the main body 2. FIG. 5 depicts a perspective view of the impression material automatic kneading apparatus 1 in a scene of attaching the holders 10 to the main body 2. When the holders 10 are attached to the main body 2, the holders 10 are arranged so that an end part of the holding member 11 of each holder 10 in the base plate 13 side is inserted into the insertion port 4 of the main body 2. Whereby, the holders 10 are held by the main body 2. At this time, the holders 10 and the main body 2 are engaged as well by the inflow ports 4a of the main body 2 passing through the opening holding parts 13a, and by the opening parts 21 of the packages 20 connected with these inflow ports 4a as described below.

On the other hand, when the holders 10 leave the main body 2, the holders 10 are just lifted.

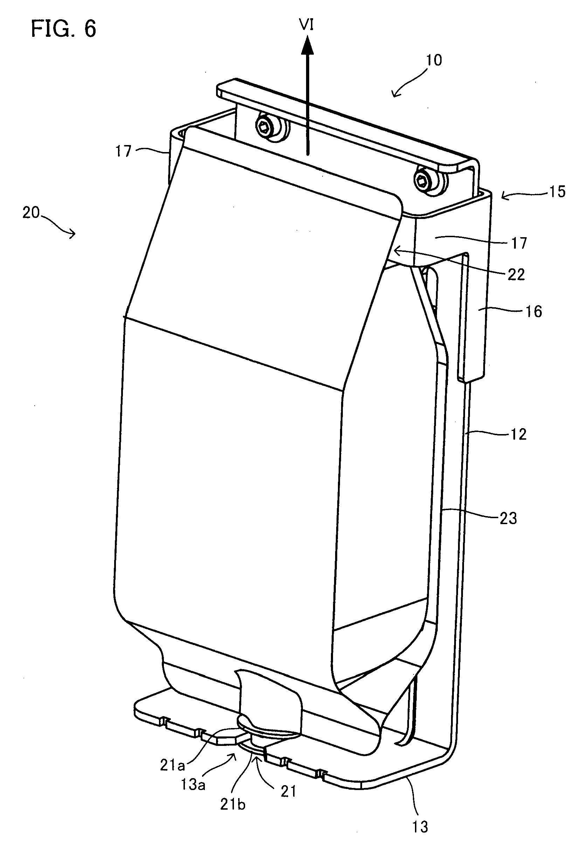

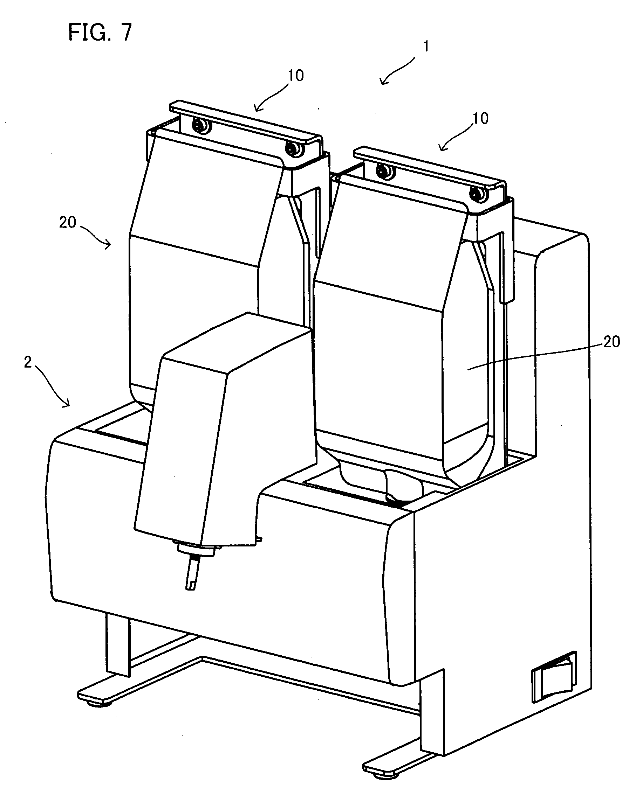

Attaching the packages 20 will be described. The packages 20 are attached to the holders 10 under a state where the holders 10 leave the main body 2. FIG. 6 depicts a perspective view in a scene of the package 20 attached to the holder 10. FIG. 7 represents a perspective view in a scene of the packages 20 attached to the impression material automatic kneading apparatus 1.

As seen from FIG. 6, an edge of the opening holding part 13a that is formed at the base plate 13 of the holder 10 is inserted into between the annular parts 21a and 21b provided for the opening part 21 of the package 20. Whereby, the base plate 13 is sandwiched between the annular parts 21a and 21b, and the opening part 21 of the package 20 is locked and held by the base plate 13 of the holder 10. On the other hand, the tips of the arms 17, which are provided for the moving member 15 of the holder 10 and bend as facing each other, are inserted into two recess parts 22 of the package 20, respectively. At this time, the moving member 15 is moved in advance against the energetic force of the elastic member 19 so as to approach the base plate 13, and the tips of the arms 17 are inserted into the recess parts 22 under this posture. Therefore, the moving member 15 is inserted so as to be energized upward by the elastic member 19. Whereby, the package 20 is held by the holder 10 as energized in the package length direction as represented by VI in FIG. 6. That is, the package 20 is held by the holder 10 before attached to the main body 2 of the apparatus under the already energized state.

The package 20 held by the holder 10 will be attached to the main body 2. This can be carried out as well as the attachment of the holder 10 to the main body 2 as described above. Further, the opening part 21 of the package 20 is connected to the inflow port 4a provided for the insertion port 4 of the main body 2. This makes it possible for the impression material automatic kneading apparatus 1 to knead and discharge an impression material.

The package 20 can leave the main body 2 as the above in reverse order.

As described above, according to the impression material automatic kneading apparatus 1, the holder 10 that holds the package 20 can be attached to and detached from the main body 2, and the package 20 may be attached to the holder 10 leaving the main body 2. Thus, it becomes easy to attach the package 20 to the holder 10.

When the package is attached to the holder 10 leaving the main body 2, the package 20 is already energized by the elastic member 19 for discharging the paste without waste. Thus, it is not necessary to apply any energetic force to the package 20 again when attached to the main body 2. Thus, it is also easy to attach the holder 10, where the package 20 is attached, to the main body 2.

According to this, for example, if the holder 10 where the package 20 is attached in advance is prepared as a spare, replacement can be carried out quickly even if a paste is lacked during operation. Thus, operation can progress with almost no interruption. Therefore, there is no need to replace pastes even if the paste is slightly left in order to avoid a case where a paste is used up in the middle of operation. In view of this, a paste can be used without waste.

Because the package 20 is already energized by the elastic member 19 when the package 20 is attached to the holder 10 leaving the main body 2 like the above, any mechanism for energizing the package again when the holder 10 is attached to the main body 2 is not necessary, and a complex mechanism for energizing two support means as disclosed in Patent Literature 2 is not necessary. Thus, it can be possible to simplify the structure.

### Reference Sings List

1 impression material automatic kneading apparatus
2 main body
3 housing
4 insertion port
5 discharging means
10 holder
11 holding member
12 back plate
13 base plate
15 moving member
16 guide
17 arm
18 coupling plate
19 elastic member

## Claims

1. An impression material automatic kneading apparatus that kneads and discharges at least two kinds of pasty materials which form a dental impression material, the apparatus comprising:
a holder that holds a package which is a container like a bag, the package containing the pasty materials; and
a main body that is connected to an opening part of the package, sucks the pasty materials from the package, and kneads said at least two kinds of pasty materials,
wherein the holder includes:
a holding member that holds the opening part of the package;
a moving member that holds an end part that is in a side opposite to the opening part of the package, the moving member movably arranged along the holding member; and
an elastic member one end of which is attached to the holding member and another end of which is attached to the moving member, and
wherein the holder can be attached to and detached from the main body in a state where the package is energized by the elastic member.
